**Europäisches Patentamt**

**European Patent Office**

**Office européen des brevets**

(11) Numéro de publication : **0 072 277**
**B1**

(12) **FASCICULE DE BREVET EUROPÉEN**

(45) Date de publication du fascicule du brevet :
02.01.86

(21) Numéro de dépôt : **82401347.8**

(22) Date de dépôt : **20.07.82**

(51) Int. Cl.⁴ : **B 60 R 13/06**, B 23 P 19/00,
B 25 J 9/00, B 60 J 1/02,
B 60 R 13/02

(54) **Dispositif de pose automatique d'un élément de vitrage d'une garniture de pavillon ou analogue.**

(30) Priorité : 06.08.81 FR 8115266

(43) Date de publication de la demande :
16.02.83 Bulletin 83/07

(45) Mention de la délivrance du brevet :
02.01.86 Bulletin 86/01

(84) Etats contractants désignés :
**DE GB IT SE**

(56) Documents cités :
**FR-A- 1 390 177**
**FR-A- 1 419 065**
**FR-A- 2 086 842**

(73) Titulaire : **REGIE NATIONALE DES USINES RENAULT**
**Boîte postale 103 8-10 avenue Emile Zola**
**F-92109 Boulogne-Billancourt (FR)**

(72) Inventeur : **Leddet, Philippe**
**17, avenue du Vexin**
**F-78450 Villepreux (FR)**

0 072 277

## Description

La présente invention est relative à un dispositif de pose automatique d'un élément de vitrage tel un pare-brise, une lunette arrière ou une garniture de pavillon ou analogue.

On connaît déjà des automatismes de manutention dans lesquels un outil de préhension saisit un objet disposé dans une position de chargement pour le transporter à une position de dépose tels que ceux décrits dans le document FR-A-1 419 065 et correspondant au préambule de la revendication 1. Une telle opération nécessite une bonne précision de la localisation dans l'espace du point de chargement et de celui de dépose.

Sur une chaîne de montage de véhicules automobiles, ces conditions ne sont jamais remplies, notamment en ce qui concerne le point de dépose et leur satisfaction risque de se traduire soit par une baisse inacceptable de la cadence de production, soit par l'installation de nombreux automatismes de manutention impliquant des investissements lourds. La présente invention a pour but de remédier à ces inconvénients en proposant notamment un dispositif qui, au contraire, augmente la productivité en permettant le montage automatique d'un élément de vitrage ou d'une garniture de pavillon, notamment sur la caisse d'un véhicule disposée sur un support lié à une chaîne de convoyage, caractérisé en ce qu'il comporte un outil de pose mobile muni d'une part de moyens de retenue dudit élément et d'autre part de capteurs détectant la proximité de la caisse et notamment de l'encadrement destiné à recevoir ledit élément et délivrant, éventuellement à travers des moyens de traitement, des signaux de commande à des moyens d'entraînement dudit outil pour le positionner correctement par rapport à la caisse sur laquelle il vient prendre appui grâce à des moyens d'accrochage pour effectuer l'opération de pose.

Ainsi, en dotant l'outil de préhension ou de pose de moyens de « perception » de l'objet à saisir ou du support destiné à recevoir l'objet, on réalise un automatisme capable de fonctionner à l'intérieur d'une sphère d'incertitude.

Selon une caractéristique de l'invention, l'outil de pose est monté sur un chariot suspendu coopérant avec les moyens d'entraînement lui permettant de se déplacer soit parallèlement soit transversalement à la chaîne.

Selon une autre caractéristique de l'invention, l'outil est disposé à l'extrémité d'un cadre susceptible d'un débattement vertical grâce à un vérin monté sur le chariot précité.

Selon encore une autre caractéristique de l'invention, l'outil comporte des capteurs qui délivrent des signaux de positions relatives « outil-caisse » de préférence selon trois directions orthogonales liées à cette dernière.

L'invention montre également un procédé de recherche automatique de référence notamment pour le montage automatique d'un élément de vitrage, d'une garniture de pavillon ou analogue sur la caisse d'un véhicule disposée sur un support lié à une chaîne de convoyage, caractérisé en ce qu'il consiste à munir un outil de pose mobile d'une part de moyens de retenue dudit élément et d'autre part de capteurs de détection de la proximité de la caisse et notamment de l'encadrement destiné à recevoir ce dernier, à traiter les signaux délivrés par lesdits capteurs, à positionner ledit outil par rapport à la caisse grâce à des moyens d'entraînement commandés par les signaux ainsi traités, à assurer la coopération mécanique de la caisse et de l'outil, à opérer la pose de l'élément de vitrage dans l'encadrement précité.

D'autres caractéristiques et avantages de la présente invention apparaîtront plus clairement à la suite de la description d'un mode d'exécution donné uniquement à titre d'exemple et représenté aux dessins annexés dans lesquels :

la figure 1 représente un schéma de principe du procédé de recherche automatique de référence appliqué à titre d'exemple au montage automatique d'un élément de vitrage sur une caisse de véhicule ;

la figure 2 représente en perspective un outil de préhension et de pose d'un élément de vitrage ;

la figure 3 représente, vu de face, le dispositif de pose automatique d'un élément de vitrage en poursuite sur une chaîne de montage ;

la figure 4 représente partiellement le dispositif de la figure 3 vu de côté ;

les figures 5 à 7 représentent les schémas des différents asservissements assurant la recherche de références et la pose automatique.

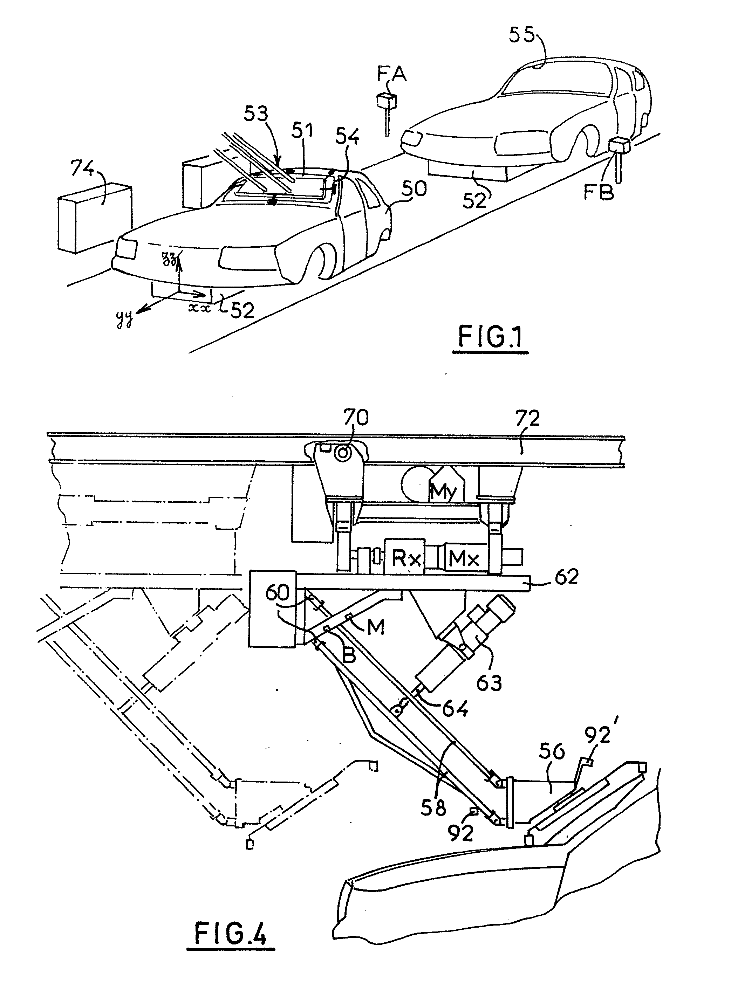

La figure 1 représente schématiquement une caisse 50 de véhicule automobile par exemple posée sur une plate-forme 52 d'une chaîne de convoyage, évoluant à une vitesse $V_1$ mesurée par une dynamo tachymétrique, et sur laquelle est destiné à être monté, en poursuite, un élément de vitrage tel un pare-brise 51.

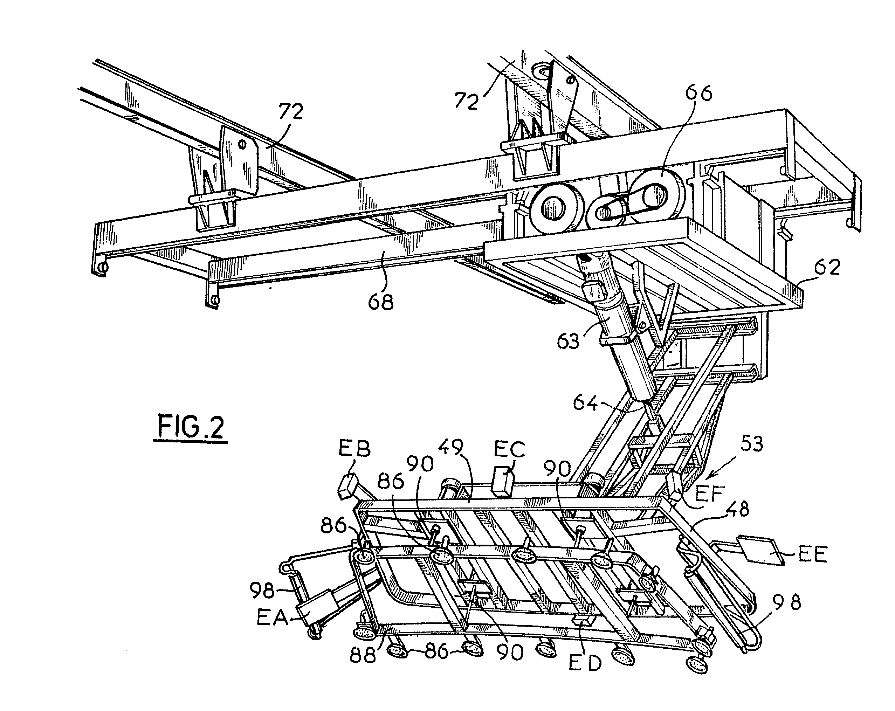

Selon l'invention, l'outil de pose mobile 53, représenté en perspective à la figure 2, comporte un ensemble de capteurs de positionnement relatif comprenant au moins deux capteurs de proximité EC, ED sensiblement horizontaux disposés sur les côtés transversaux 49 de l'outil et destinés à mesurer sa distance selon un axe vertical zz par rapport à la caisse, et particulièrement par rapport à la portion de celle-ci délimitant l'encadrement 55 de réception de l'élément de vitrage, une paire (EA, EE) ou si nécessaire deux paires de capteurs (EA, EE) et (EB, EF) de portées différentes ou non montés sur les côtés longitudinaux 48 du corps de l'outil de manière à ce que la face active de chacune desdits capteurs soit légèrement inclinée par rapport au plan de l'outil et sensiblement parallèle aux montants 54 délimitant l'encadrement.

2

Les différents signaux délivrés par les capteurs et qui seront désignés par la suite par la même référence que celle du capteur dont ils émanent font l'objet d'un traitement au moyen de circuits de calcul analogiques ou numériques, non représentés, de manière à donner les positions relatives de l'outil et de la caisse par rapport à un référentiel oxyz lié à cette dernière.

C'est ainsi que l'élaboration du signal (EC + ED)/2 réalise la mesure de la position relative moyenne suivant l'axe vertical zz, celle de (EA + EE)/2 et (EB + EF)/2 la position relative moyenne en approche et en position respectivement selon l'axe longitinal yy ; tandis que les signaux (EA − EE) et (EB − EF) donnent selon l'axe transversal xx l'erreur de centrage en approche et en position respectivement.

Comme nous le verrons le déplacement de l'outil selon chacun des axes précités est assuré par des moyens d'entraînement comprenant un moteur commandé par les signaux, préalablement traités, fournis par les capteurs de détection du déplacement relatif outil-caisse dans la direction considérée.

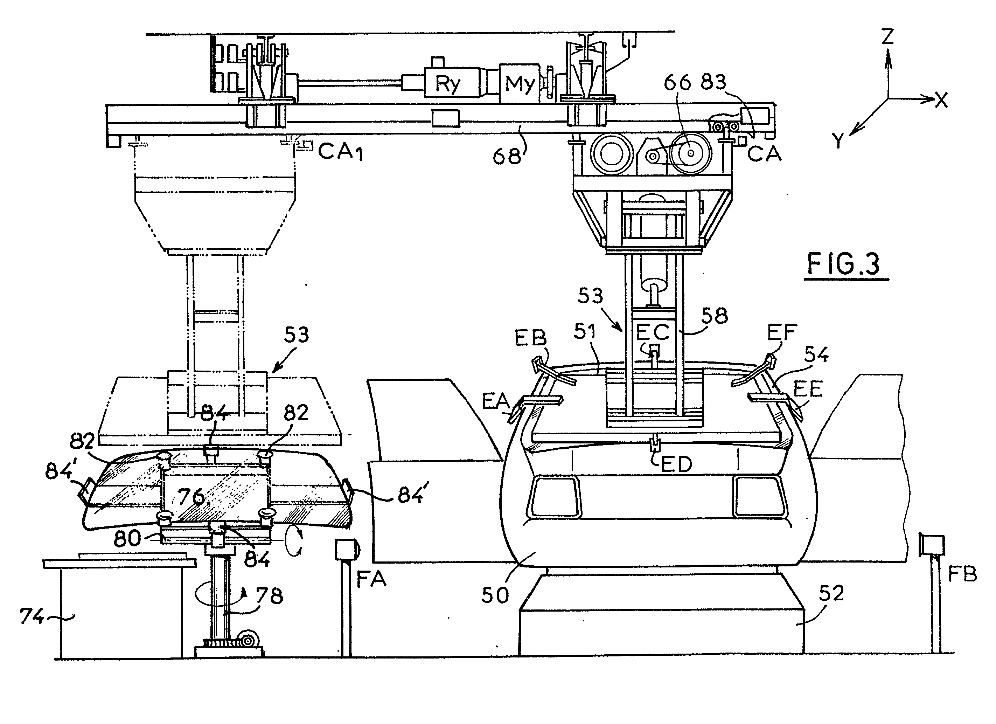

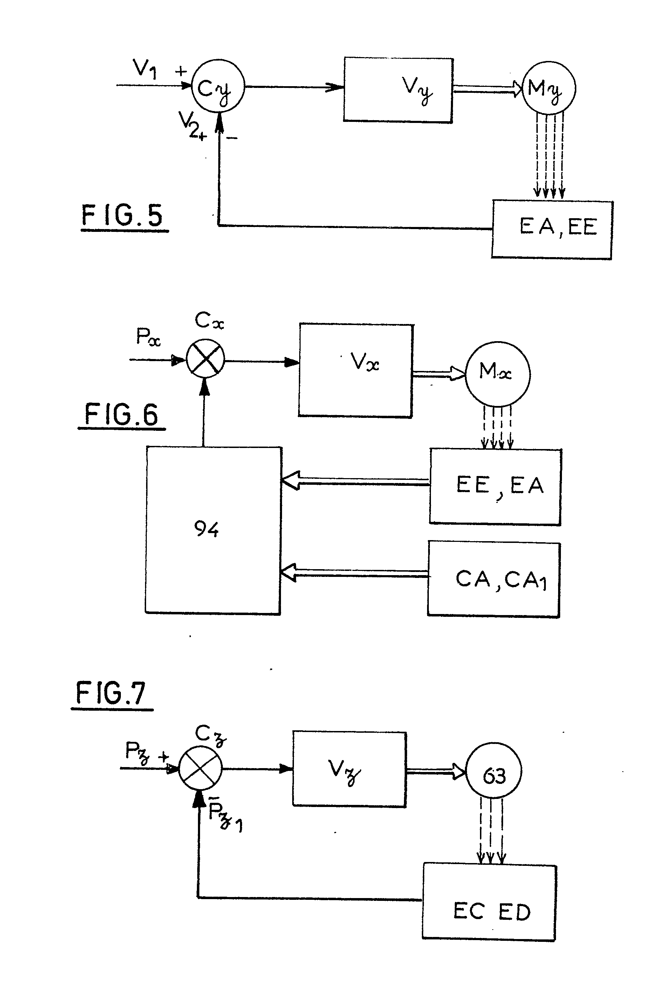

Les figures 3 et 4 représentent un dispositif de préhension et de pose selon l'invention comprenant l'outil mobile 53 muni de ses capteurs et rendu solidaire d'un support 56 situé à l'extrémité inférieure d'un cadre 58 dont l'extrémité supérieure est articulée autour de deux axes horizontaux 60 solidaires d'un chariot 62 sur lequel est monté un vérin 63 dont la tige du piston 64 est reliée audit cadre pour en assurer le débattement dans la direction verticale entre deux positions extrêmes définies par des détecteurs de proximité M et B.

Le chariot est monté sur des roues 66 entraînées par des moyens comprenant un moteur Mx et un réducteur Rx, sur les rails d'un berceau transversal 68 lui permettant de venir se placer ou de s'écarter de l'axe longitudinal YY de la chaîne faisant partie d'un référentiel absolu XYZ, parallèle à oxyz ledit berceau étant suspendu au moyen de galets 70 sur des rails longitudinaux 72 le long desquels il est susceptible de se déplacer parallèlement à la chaîne de convoyage grâce à des moyens d'entraînement comprenant un moteur My et un réducteur Ry, lesdits moteurs Mx, My étant de préférence des moteurs à courant continu à système de commande à vitesse variable.

Le montage automatique d'un élément de vitrage par exemple s'effectue selon la séquence suivante.

Le chariot étant en position d'attente généralement à l'écart de la chaîne, on dépose, sur une table de retournement 74 munie d'un ensemble de butées, un pare-brise 51 dont la préhension est assurée par un cadre adjacent 76 monté rotatif autour d'un axe vertical 78 et susceptible d'un basculement autour d'un axe horizontal 80 et permettant d'appréhender et de présenter face à l'outil le pare-brise grâce à un ensemble de ventouses 82 reliées à un circuit pneumatique (non représenté) piloté de manière à créer et maintenir une dépression tant que le pare-brise est sur ledit cadre.

La position correcte du pare-brise sur le cadre 76 commande le déplacement du chariot qui quitte sa position d'attente, pour avancer parallèlement à l'axe YY de la chaîne et venir se placer, grâce à l'action d'un détecteur de position longitudinale (non représenté) placé sur le rail 72 et agissant sur le moteur My, à l'aplomb du poste de chargement, situé en bordure de chaîne et constitué par la table de retournement munie de son cadre précité qui comporte en plus des ventouses 82 un ensemble de butées métalliques 84, 84' réparties sur sa périphérie, et dont au moins deux 84' sont mobiles de manière à s'écarter lors de l'opération de chargement ou de déchargement du pare-brise, et venir au contact de son bord entre ces deux opérations.

Le chariot dans cette position, l'outil amorce une descente rapide commandée par le vérin 63 suivie par un autocentrage longitudinal et latéral grâce à l'interaction des capteurs de proximité définis précédemment et des butées métalliques 84 et 84' et cela selon une séquence décrite plus loin en relation avec la pose du pare-brise dans l'encadrement de la caisse ; à la suite de quoi, l'outil, en positionnement correct, vient prendre le pare-brise au moyen d'un ensemble de ventouses 86 réparties sur un cadre 88 mu par un ensemble de vérins 90 montés sur le corps de l'outil et reliés à un circuit pneumatique qui crée une dépression assurant le maintien de l'élément de vitrage jusqu'à sa pose.

L'outil est ensuite animé d'un mouvement de montée rapide au moyen du vérin 63, suivi d'un mouvement de dégagement longitudinal de retour à la position d'attente.

Une cellule photoélectrique (FA, FB) placée sur la chaîne détecte l'approche d'une caisse 50 et commande le déplacement transversal du chariot qui vient se placer, grâce à la coopération d'un détecteur de proximité CA monté sur ledit chariot 62, et d'une came 83, dans l'axe YY de la chaîne, et avancer rapidement grâce au moteur My en direction de la caisse précitée dont la proximité, détectée, par un premier moyen optique 92 lié à l'outil, déclenche l'arrêt du mouvement longitudinal de l'outil qui, grâce à un second moyen optique 92' détectant l'encadrement, part dans la direction opposée, en vitesse relativement lente, légèrement inférieure à celle de la chaîne, lui permettant de s'approcher lentement de la caisse qui à un moment donné se trouve dans le champ d'un des détecteurs de proximité (EA, EE) ou (EB, EF). La vitesse de l'outil est alors asservie à celle de la chaîne au moyen d'un circuit dont le bloc diagramme est représenté à la figure 5 et selon lequel le moteur de déplacement longitudinal My est piloté par un variateur de vitesse Vy lui-même commandé par un comparateur Cy dont une première entrée reçoit la mesure de la vitesse de la chaîne V1 et une seconde entrée la correction de vitesse V2 fonction du signal délivré par les capteurs analogiques de proximité EA et EE. En même temps s'effectue le centrage relatif de positionnement vertical sous l'action du signal (EC + ED) de commande de l'autovérin d'une part et de positionnement transversal en position et si nécessaire en approche sous l'action des signaux (EA − EE) et (EB − EF) de commande du moteur Mx d'autre part.

La figure 6 représente le bloc diagramme de l'asservissement en position transversale du moteur à

3

courant continu Mx qui déplace dans la direction correspondante l'outil monté sur le chariot, dont la position dans ladite direction est détectée soit par les détecteurs de proximité des références absolues tels CA et $CA_1$ définissant l'axe de la chaîne et la position latérale de la table de retournement respectivement et dont les signaux sont délivrés à travers un bloc de commutation capteurs-détecteurs 94 à un comparateur Cx qui à partir d'une valeur de consigne en position Px délivre un signal d'erreur de commande du variateur de vitesse Vx du moteur Mx pour amener le chariot à la position désirée par rapport à la chaîne de convoyage, soit par les capteurs analogiques de position relative par rapport à la caisse montés sur l'outil tels que EA, EE de manière à annuler l'erreur de centrage selon une boucle similaire agissant sur le même variateur de vitesse pour commander le même moteur après la commutation, définie par la séquence, détecteurs-capteurs.

La figure 7 représente le bloc diagramme de l'asservissement dans la direction verticale au moyen de l'autovérin 63 à travers un variateur Vz et un comparateur Cz d'une consigne de position en hauteur Pz et du signal $Pz_1$ fonction de EC + ED.

Une fois que le positionnement relatif correct, mesuré par les capteurs de l'outil, est atteint, des vérins pneumatiques 98 montés sur ce dernier viennent accrocher les montants avant de la caisse à la suite de quoi le pare-brise est appliqué dans l'encadrement par l'actionnement des quatre vérins 90 et maintenu dans cette position, du moins pour les pare-brises collés, pendant un temps T durant lequel une boucle d'asservissement en force chariot-caisse entre en action, et à l'expiration duquel la commande de la centrale pneumatique (non représentée) permet aux ventouses 86 de libérer le pare-brise.

L'opération de montage étant ainsi achevée, la commande pneumatique assure d'une part le desserrage des montants et d'autre part le retrait des vérins de pose du pare-brise pour permettre à l'outil de reprendre par un mouvement rapide sa position d'attente initiale afin de redémarrer le cycle décrit ci-dessus.

Le centrage qui vient d'être décrit s'applique également à l'opération de préhension par l'outil du pare-brise disposé sur le cadre de la table de retournement, opération dont la séquence est simplifiée du fait que le poste de chargement est immobile.

Bien entendu, le procédé et le dispositif selon l'invention ne sont nullement limités, au montage en poursuite d'un pare-brise, mais peuvent être appliqués au montage sur une caisse ou tout autre produit de n'importe quel élément présentant une symétrie par rapport à l'axe longitudinal de ce dernier tel par exemple une lunette arrière ou une garniture de pavillon.

Par ailleurs le procédé peut être étendu aux automatismes de manutentions avec recherches automatiques de références impliquant des rotations ; en effet en remplaçant les capteurs EC, ED par deux paires (EC, ED) (EC)', (ED)' disposées symétriquement par rapport au plan longitudinal de l'outil de préhension il est possible d'obtenir par des moyens de traitement les valeurs :

$$(EC - ED) + ((EC)' - (ED)')$$

$$(ED - (ED)') + (EC - (EC)')$$

de l'erreur de rotation autour des axes transversal et longitudinal respectivement.

Par ailleurs, la valeur (EA − EE) donne, en cas de positionnement transversal correct, l'erreur de rotation autour de l'axe vertical.

Ceci peut s'appliquer notamment à la pose des baguettes de toit par exemple qui nécessite une bonne orientation longitudinale de ces dernières. En effet, l'utilisation de deux paires de capteurs (EB − EF) et (EA − EE), disposées sur les côtés longitudinaux de l'outil permet grâce au calcul des valeurs :

$$(EB - EF) - (EA - EE)$$

et

$$(EB - EF) + (EA - EE)$$

d'obtenir l'erreur de rotation autour de l'axe zz et l'erreur transversale selon xx respectivement.

La séquence décrite précédemment peut être mise en œuvre soit au moyen des techniques classiques mettant en œuvre des relais ou soit de préférence au moyen d'un automate programmable, ou d'un calculateur.

## Revendications

1. Dispositif de montage automatique d'un élément de vitrage ou d'une garniture de pavillon sur la caisse d'un véhicule disposée sur un support lié à une chaîne de convoyage, caractérisé en ce qu'il comporte un outil de pose mobile (53) muni d'une part de moyens de retenue (86, 88) dudit élément (51), et d'autre part de capteurs (EC, ED ; EA, EE) détectant la proximité de la caisse (50) et notamment de

4

l'encadrement (55) destiné à recevoir ledit élément et délivrant, éventuellement à travers des moyens de traitement, des signaux de commande à des moyens d'entraînement (Mx, My) dudit outil pour le positionner correctement par rapport à la caisse sur laquelle il vient prendre appui grâce à des moyens d'accrochage (98) pour effectuer l'opération de pose.

2. Dispositif selon la revendication 1, caractérisé en ce que l'outil de pose (53) est monté sur un chariot suspendu (62) coopérant avec des moyens d'entraînement (Mx, Rx) lui permettant de se déplacer soit parallèlement, soit transversalement à la chaîne.

3. Dispositif selon la revendication 2, caractérisé en ce que l'outil (53) est disposé à l'extrémité d'un cadre (58) susceptible d'un débattement vertical grâce à un vérin monté sur le chariot précité.

4. Dispositif selon l'une des revendications 1 à 3, caractérisé en ce que l'outil comporte des moyens de retenue (86) de l'élément à poser constitués par un ensemble de ventouses (86) reliées à un circuit pneumatique.

5. Dispositif selon l'une des revendications 1 à 4, caractérisé en ce que l'outil comporte des capteurs (EA/EB) qui délivrent des signaux de positions relatives « outil-caisse » de préférence selon trois directions orthogonales liées à cette dernière.

6. Dispositif selon la revendication 5, caractérisé en ce qu'il comporte des moyens de traitement (Cx, Cy) des signaux délivrés par les capteurs et qui calculent l'erreur de centrage transversal et/ou la mesure de la distance « outil-caisse » selon l'axe vertical et/ou longitudinal.

7. Dispositif selon la revendication 6, caractérisé en ce que les moyens de traitement calculent les mesure et erreur précitées aussi bien en approche qu'en position.

8. Dispositif selon l'une des revendications 3 à 7, caractérisé en ce qu'il comporte des détecteurs de proximité (FA/FB) placés en des points prédéterminés sur le chemin de déplacement longitudinal ou transversal du chariot et/ou du déplacement vertical du parallélogramme.

9. Dispositif selon la revendication 8, caractérisé en ce qu'il comporte une boucle d'asservissement en position transversale du chariot comprenant un moteur de déplacement transversal piloté par un variateur de vitesse commandé par un signal d'erreur élaboré à travers un commutateur soit à partir des signaux des capteurs analogiques portés par l'outil soit des détecteurs de proximité précités.

10. Dispositif selon la revendication 8, caractérisé en ce qu'il comporte une boucle d'asservissement de vitesse en poursuite longitudinale du chariot (62) comprenant un moteur de déplacement longitudinal (Mx) piloté par un variateur de vitesse commandé par un signal d'erreur résultant de la comparaison de la mesure de la vitesse de la chaîne et d'une correction de vitesse élaborée à partir des capteurs de proximité portés par l'outil.

11. Dispositif selon l'une des revendications 1 à 10, caractérisé en ce que l'outil comporte des vérins (98), de serrage de l'encadrement destiné à recevoir l'élément à poser actionnés une fois le positionnement relatif correct atteint.

12. Dispositif selon la revendication 11, caractérisé en ce que l'outil comporte également des vérins (90) de pose de l'élément dans l'encadrement.

13. Dispositif selon la revendication 12, caractérisé en ce qu'il comporte une boucle d'asservissement en force du chariot-caisse lors de l'opération de pose.

14. Dispositif selon l'une des revendications 5 à 13, caractérisé en ce que l'outil comporte des capteurs supplémentaires (EC, ED) permettant d'obtenir à l'aide des moyens de traitement la mesure de l'erreur de rotation autour d'au moins l'un des trois axes orthogonaux liés à la caisse.

15. Dispositif selon l'une des revendications 6 à 14, caractérisé en ce que les capteurs et les moyens de traitement permettent de positonner l'outil par rapport à l'élément de vitrage ou la garniture de pavillon pour en assurer la préhension par ce dernier à un poste de chargement.

16. Dispositif selon la revendication 15, caractérisé en ce que l'élément à poser est disposé entre des butées métalliques (84, 84') dont l'une au moins est mobile.

## Claims

1. Apparatus for automatically mounting a glazing element or a roof trim member to the body of a vehicle disposed on a carrier connected to a conveyor chain characterised in that it comprises a movable positioning tool (53) provided on the one hand with means (86, 88) for retaining said element (51) and on the other hand with detectors (EC, ED ; EA, EE) for detecting the proximity of the body (50) and in particular the frame means (55) intended to receive said element, and for delivering, optionally by way of processing means, control signals to means (Mx, My) for driving said tool for positioning it correctly with respect to the body against which it comes to bear by way of catching means (98) for carrying out the positioning operation.

2. Apparatus according to claim 1 characterised in that the positioning tool (53) is mounted on a suspended carriage (62) co-operating with drive means (Mx, Rx) permitting it to be displaced either in parallel or in transverse relationship to the chain.

3. Apparatus according to claim 2 characterised in that the tool (53) is disposed at the end of a frame (58) which is capable of a vertical reciprocating movement by means of a jack mounted on said carriage.

4. Apparatus according to one of claims 1 to 3 characterised in that the tool comprises means (86) for

5

retaining the element to be set in position, said means being formed by an array of suckers (86) connected to a pneumatic circuit.

5. Apparatus according to one of claims 1 to 4 characterised in that the tool comprises detectors (EA/EB) which supply signals in respect of relative « tool-body » positions, preferably in three orthogonal directions linked to said body.

6. Apparatus according to claim 5 characterised in that it comprises means (Cx, Cy) for processing the signals supplied by the detectors and for calculating the transverse centering error and/or measurement of the « tool-body » distance along the vertical and/or longitudinal axis.

7. Apparatus according to claim 6 characterised in that the processing means calculate said measurement and error both in respect of approach and position.

8. Apparatus according to one of claims 3 to 7 characterised in that it comprises proximity detectors (FA/FB) disposed at predetermined points on the path of longitudinal or transverse displacement of the carriage and/or vertical displacement of the parallelogram.

9. Apparatus according to claim 8 characterised in that it comprises a loop for control in respect of transverse position of the carriage, including a motor for transverse displacement which is pilot-controlled by a speed varying means actuated by an error signal produced by way of a switching means either from the signals of the analog detectors carried by the tool or from said proximity detectors.

10. Apparatus according to claim 8 characterised in that it comprises a loop for speed control in respect of longitudinal tracking of the carriage (62), including a motor (Mx) for longitudinal displacement which is pilot-controlled by a speed varying means actuated by an error signal resulting from comparison of the measurement of the speed of the chain and a speed correction produced from the proximity detectors carried by the tool.

11. Apparatus according to one of claims 1 to 10 characterised in that the tool comprises jacks (98) for gripping the frame means intended to receive the element to be set in position, said jacks being actuated once correct relative positioning is attained.

12. Apparatus according to claim 11 characterised in that the tool also comprises jacks (90) for positioning the element in the frame means.

13. Apparatus according to claim 12 characterised in that it includes a loop for control in respect of force of the body-carriage during the positioning operation.

14. Apparatus according to one of claims 5 to 13 characterised in that the tool comprises supplementary detectors (EC, ED) which by way of the processing means make it possible to obtain a measurement of the rotational error about at least one of the three orthogonal axes which are linked to the body.

15. Apparatus according to one of claims 6 to 14 characterised in that the detectors and the processing means permit positioning of the tool with respect to the glazing element or the roof trim member in order to ensure gripping thereof by the tool at a loading station.

16. Apparatus according to claim 15 characterised in that the element to be set in position is disposed between metallic abutments (84, 84'), at least one of which is movable.

## Patentansprüche

1. Vorrichtung zum automatischen Aufsetzen einer Windschutzscheibe oder einer Dachverkleidung auf eine Fahrzeugkarosserie, die mittels einer Haltung an einem Fließband befestigt ist, dadurch gekennzeichnet, daß sie ein bewegliches Aufsetzwerkzeug (53) aufweist, das einerseits mit Haltemitteln (86, 88) für das Teil (51) versehen ist und andererseits mit Fühlern (EC, ED, EA, EE), die die Nähe der Karosserie (50) feststellen und insbesondere die Aussparung (55) zur Aufnahme des Teils und die, eventuell über Verarbeitungsmittel, Steuersignale an die Antriebsmittel (MX, MY) des Werkzeugs liefern um es korrekt bezüglich zur Karosserie zu positionieren, auf der es sich abstützt mittels Verankerungsmitteln (98) um das Aufsetzen durchzuführen.

2. Vorrichtung nach Anspruch 1, dadurch gekennzeichnet, daß das Aufsetzwerkzeug (53) an einem Hängeschlitten (62) angeordnet ist, der mit Antriebsmitteln (MX, RX) zusammenwirkt, so daß er sich entweder parallel oder quer zum Band verschieben kann.

3. Vorrichtung nach Anspruch 2, dadurch gekennzeichnet, daß das Werkzeug (53) am Ende eines Rahmens (58) angeordnet ist, der eine Vertikalschwingung dank einer am genannten Schlitten befestigten Hebevorrichtung durchführen kann.

4. Vorrichtung nach einem der Ansprüche 1 bis 3, dadurch gekennzeichnet, daß das Werkzeug Haltemittel (86) für das aufzusetzende Teil aufweist, die aus einer Anzahl von Saugnäpfen (86) bestehen, die mit einem pneumatischen Kreis verbunden sind.

5. Vorrichtung nach einem der Ansprüche 1 bis 4, dadurch gekennzeichnet, daß das Werkzeug Fühler (EA/EB) aufweist, welche Positionssignale bezüglich « Werkzeug-Karosserie » liefern, vorzugsweise gemäß drei orthogonalen mit letzterer verbundenen Richtungen.

6. Vorrichtung nach Anspruch 5, dadurch gekennzeichnet, daß sie Verarbeitungsmittel (CX, CY) für die von den Fühlern gelieferten Signale aufweist, welche Abweichungen der Querzentrierung und/oder der Messung des Abstandes « Werkzeug-Karosserie » entlang der vertikalen und/oder Längsachse berechnen.

7. Vorrichtung nach Anspruch 6, dadurch gekennzeichnet, daß die Verarbeitungsmittel die genannten Messungen und Abweichungen sowohl beim Annähern als auch in Stellung berechnen.

8. Vorrichtung nach einem der Ansprüche 3 bis 7, dadurch gekennzeichnet, daß sie Annäherungsdetektoren (MA/FB) aufweist, die an bestimmten Stellen entlang des Längsverschiebeweges oder Querverschiebeweges des Schlittens und/oder der Vertikalverschiebung des Parallelogramms vorgesehen sind.

9. Vorrichtung nach Anspruch 8, dadurch gekennzeichnet, daß sie einen Regelkreis für die Querstellung des Schlittens aufweist, die einen Motor zur Querverschiebung enthält, der von einem stufenlos regelbaren Getriebe gesteuert wird, in Abhängigkeit von einem Fehlersignal, das von einem Schalter stammt, entweder ausgehend von Signalen von Analogfühlern des Werkzeugs oder von den genannten Annäherungsdetektoren.

10. Vorrichtung nach Anspruch 8, dadurch gekennzeichnet, daß sie einen Regelkreis für die Geschwindigkeit der Längsverschiebung des Schlittens (62) aufweist, der einen Motor für die Längsverschiebung (Mx) enthält, der von einem stufenlos regelbaren Getriebe gesteuert wird, in Abhängigkeit von einem Fehlersignal, das aus dem Vergleich der Messung der Geschwindigkeit des Bandes mit einer Korrektur der errechneten Geschwindigkeit ausgehend von den vom Werkzeug getragenen Annäherungsfühlern resultiert.

11. Vorrichtung nach einem der Ansprüche 1 bis 10, dadurch gekennzeichnet, daß das Werkzeug Druckvorrichtungen (98) aufweist zum Einklemmen des Rahmens, der zur Aufnahme des aufzusetzenden Teils bestimmt ist, die dann betätigt werden, wenn die korrekte Relativstellung erreicht ist.

12. Vorrichtung nach Anspruch 11, dadurch gekennzeichnet, daß das Werkzeug ebenfalls Druckvorrichtungen (90) zum Einsetzen des Teils in die Aussparung aufweist.

13. Vorrichtung nach Anspruch 12, dadurch gekennzeichnet, daß sie einen Regelkreis aufweist für die Kraft des Schlittenkastens bei dem Einsetzvorgang.

14. Vorrichtung nach einem der Ansprüche 5 bis 13, dadurch gekennzeichnet, daß das Werkzeug zusätzliche Fühler (EC, ED) aufweist, die es ermöglichen mit Hilfe von Verarbeitungsmitteln eine Messung des Drehfehlers um wenigstens eine der drei orthogonalen mit der Karosserie verbundenen Achsen zu erhalten.

15. Vorrichtung nach einem der Ansprüche 6 bis 14, dadurch gekennzeichnet, daß die Fühler und die Verarbeitungsmittel die Positionierung des Werkzeugs bezüglich der Windschutzscheibe oder der Dachverkleidung ermöglichen um das Ergreifen der letzteren an einer Zufuhrstelle zu gewährleisten.

16. Vorrichtung nach Anspruch 15, dadurch gekennzeichnet, daß das aufzusetzende Teil zwischen metallischen Anschlägen (84, 84') angeordnet ist, von denen wenigstens eins beweglich ist.

FIG.1

FIG.4

1

FIG.2

FIG.3

0 072 277

FIG.5

FIG.6

FIG.7